# EUROPÄISCHE PATENTSCHRIFT

(11) **EP 1 231 693 B1**
(45) Veröffentlichungstag und Bekanntmachung des Hinweises auf die Patenterteilung: **04.01.2012**
(21) Anmeldenummer: 02000934.6
(22) Anmeldetag: 16.01.2002
(51) Int. Cl.: H02G 3/08

(54) **Kabeleinführung in ein Installationsgerät**
Cable entry in an electrical installation device
Entrée de câble pour dispositif d'installation électrique

(30) Priorität: 08.02.2001 DE 10105810
(43) Veröffentlichungstag der Anmeldung: 14.08.2002
(73) Patentinhaber: ABB AG, 68309 Mannheim (DE)
(72) Erfinder: Pfeifer, Theo, Dipl.-Ing., 77876 Kappelrodeck (DE); Armbruster, Manfred, 77855 Achern-Oberachern (DE)

(56) Entgegenhaltungen:
- EP-A- 0 653 825
- EP-A- 0 671 797
- EP-A- 1 074 776
- DE-A- 2 557 330

## Beschreibung

Die Erfindung betrifft eine Kabeleinführung in ein Installationsgerät gemäß dem Oberbegriff des Anspruches 1. (Siehe EP-A1-1074776).

Kabeleinführungen insbesondere bei sogenannten Einspeisegehäusen, Automatenkasten Sicherungskasten und dergleichen haben die Aufgabe, einerseits das eingeführte Kabel zu haltern und andererseits auch das eingeführte Kabel gegen Eindringen von Flüssigkeit und dergleichen abzudichten.

Aus der EP 06 71 797 B 1 ist eine solche Kabeleinführung bekannt geworden, bei der eine Wandung eine der Anzahl der einzuführenden Kabel entsprechende Anzahl von Öffnungen aufweist, in die Einführungsstutzen aus weichelastischem Material eingesetzt sind, die eine Abschlußwandung aufweisen, die zwecks Einführung des Kabels ausgeschnitten werden kann.

Aus der DE 25 57 330 ist eine Wand mit mehreren Öffnungen vorgesehen, in die Einführungstüllen eingefügt sind, die sich stufig nach innen, also ins Innere des Gehäuses verjüngen.

Weitere ähnliche Anordnungen sind beispielsweise dem DE 90 05 252 U 1 zu entnehmen.

Aufgabe der Erfindung ist es, eine Kabeleinführung der eingangs genannten Art zu schaffen, mit der unterschiedlich große Kabelquerschnitte eingeführt werden können, ohne hierbei die Schutzart zu verletzen, wobei die Führung des Kabels ebenfalls sicher gestellt und garantiert ist, daß in diesem Bereich keine Möglichkeit besteht, ungezählten Strom zu entwenden.

Diese Aufgabe wird erfindungsgemäß gelöst durch die Merkmale des Anspruches 1.

Erfindungsgemäß ist die Innenfläche der Ausbuchtung mit weich elastischem Kunststoff belegt oder beschichtet, wobei die Öffnung vor Einführung des Kabels mittels des weichelastischen Kunststoffes verschlossen ist, und darüber hinaus ist die Ausbuchtung bzw. der Fuß der Ausbuchtung auf der der Ausbuchtung entgegengesetzt liegenden Seitenfläche des Wandabschnittes von dem weich elastischen Kunststoff unter Freilassung einer Durchgangsöffnung, deren Mittelachse mit der Öffnung fluchtet, abgedeckt.

Dadurch ist auf der einen Seite dafür gesorgt, daß der Wandabschnitt praktisch durchgängig steif ausgebildet ist, wobei der Wandabschnitt außerdem im nicht abgeschnittenen Bereich innen mit dem weich elastischen Kunststoff bedeckt bleibt.

Weitere vorteilhafte Ausgestaltungen der Erfindung sind den Unteransprüchen zu entnehmen.

Anhand der Zeichnung, in der ein Ausführungsbeispiel der Erfindung dargestellt ist, sollen weitere vorteilhafte Ausgestaltungen und Verbesserungen der Erfindung näher erläutert und beschrieben werden.

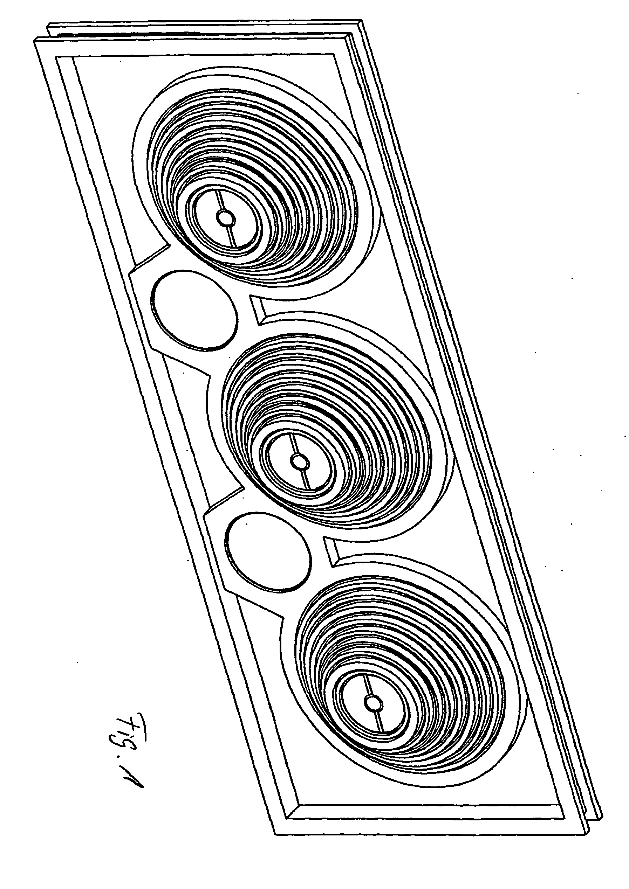

Es zeigen
- Fig. 1: eine perspektivische Aufsicht auf einen Wandabschnitt von einer Seite,
- Fig. 2: eine perspektivische Ansicht des Wandabschnitts gemäß Fig. 1, von der anderen Seite gesehen,
- Fig. 3: eine Schnittansicht durch den Wandabschnitt gemäß Schnittlinie III/IIIder Fig. 2 und
- Fig. 4: eine Schnittansicht ähnlich der Schnittlinie III/III der Fig. 2 durch eine Ausbuchtung, in vergrößerter Darstellung.

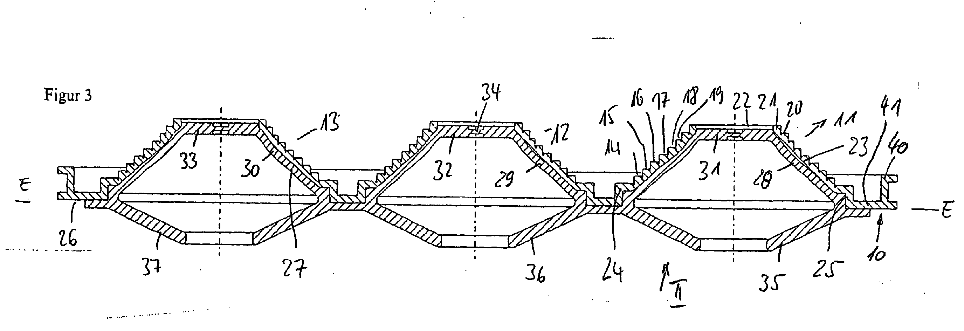

Es sei zunächst Bezug genommen auf die Fig. 3. Diese zeigt einen Wandabschnitt 10, der drei Ausbuchtungen 11, 12, 13 aufweist, die sich konisch verjüngen, wobei die Außenfläche der Ausbuchtungen 11 bis 13 mit umlaufenden Stufen 14 bis 20 versehen ist. Der Durchmesser der Stufe 14 ist gegenüber dem Durchmesser der Stufe 15 kleiner und so weiter.

An die Stufe 20 schließt sich ein axial vorspringender Kragen 21 an, der eine Öffnung 22 umgibt. Die Innenfläche 23 jeder Ausbuchtung ist konisch ausgebildet, wobei lediglich im Bereich des Fußes 24, dessen Außenfläche ebenfalls stufig ist, ein aus der Ebene E-E vorspringeder Absatz 25 vorgesehen ist. An diesen Absatz 25 schließen sich dann die Stufen 14 bis 20 an.

Die Innenflächen der Ausbuchtungen ebenso wie ein Teilbereich der den Ausbuchtungen 11 bis 13 entgegengesetzt liegenden Seitenflächen 26 des Wandabschnittes 10 ist von einem weichelastischen Kunststoff 27 bedeckt, der sich der Konusfläche 23 anpaßt und somit entsprechende Ausbuchtungen 28, 29 und 30 aufweist. Im Bereich des Kragens 21 sind die Ausbuchtungen 28 bis 30 mit einer Membran 31 bis 33 verschlossen, wobei jede Membran, wie anhand der Membran 32 dargestellt ist, einen mittigen Abschnitt 34 mit geringer Dicke aufweist, so daß durch diesen Abschnitt 34 nachAusschneiden dieses Abschnittes 34 Kabel mit geringem Durchmesser hindurch geführt werden können.

Im Bereich jeder Ausbuchtung 11, 12 und 13 schließen sich an die Ausbuchtungen 28, 29 und 30 konische Abschnitte 35 bis 37 an, die in die entgegengesetzte Richtung wie die Ausbuchtungen 11, 12 und 13 konusförmig vorspringen, wobei der Konuswinkel der Ausbuchtungen 11 bis 13 deutlich kleiner ist als der Konuswinkel der Abschnitte 35 bis 37. Fluchtend mit dem Kragen 21 besitzt jeder Abschnitt 35 bis 37 eine Öffnung 38. Dabei liegt der Konuswinkel der Abschnitte 35 bis 37 in der doppelten Größenordnung wie der Konuswinkel der Ausbuchtungen 11 bis 13. Darüberhinaus öffnen sich die Ausbuchtungen zueinander.

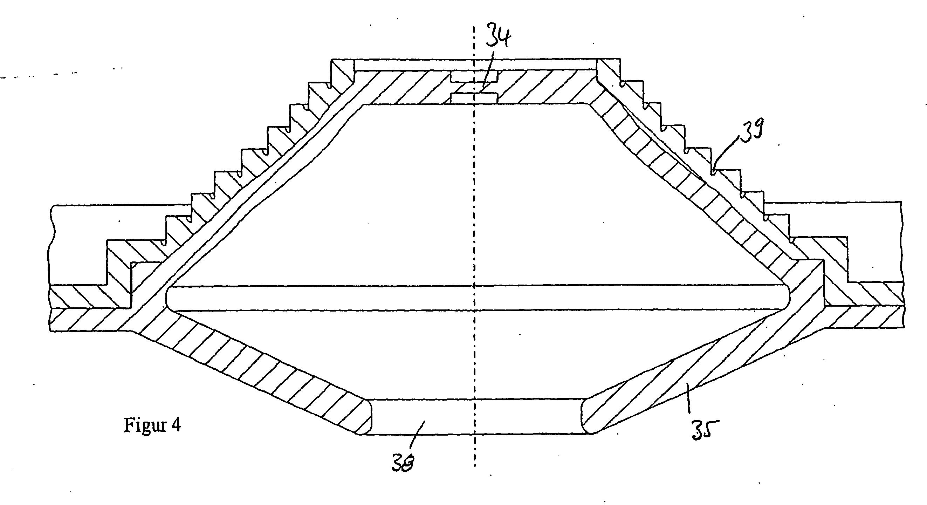

Aus Fig. 4 ist ersichtlich, daß im Bereich jeder Stufe eine Rille 39 vorgesehen ist, die das Abschneiden der entsprechenden Stufe der Ausbuchtungen 11 bis 13 begünstigt.

Zur Versteifung des Wandabschnittes ist ein umlaufender Rand 40 vorgesehen, der in die Richtung der Ausbuchtungen 11 bis 13 vorspringt.

Der Wandabschnitt 10 ist demgemäß aus zwei Teilen zusammengesetzt, nämlich einem starren Kunststoff bestehenden Abschnitt 41 mit den Ausbuchtungen 11 bis 13 und der Komponente mit dem weich elastischen Kunststoff, der gegen die Innenflächen der Ausbuchtungen 11 bis 13 sowie gegen die auf der entgegen gesetzten Seite liegende Seitenfläche des Wandabschnittes 10 anliegt und daran beispielsweise durch kleben fixiert ist.

Zum Einführen eines Kabels wird im Bereich der Ausbuchtungen 11, 12 und 13 an der entsprechenden Stufe die Ausbuchtung aufgetrennt bzw. abgeschnitten, wobei jedem Durchmesser einer Stufe ein bestimmter Kabelquerschnitt zugeordnet ist. Die auf der Innenseite der Ausbuchtungen 11 bis 13 angebrachten Ausbuchtungen 28 bis 30 aus dem weich elastischen Kunststoff dienen als zusätzliche Abdichtung der Kabel bei Einführung in das Installationsgerät. Sollte an dieser Stelle keine Abdichtung erzielt werden können, dann wird die Abdichtung mittels der Abschnitte 35, 36, 37 erzielt. Diese Abschnitte 35 bis 37 können, da das weichelastische Material sehr elastisch ist, sich mit den Öffnungen 38 an den Kabeldurchmesser anpassen.

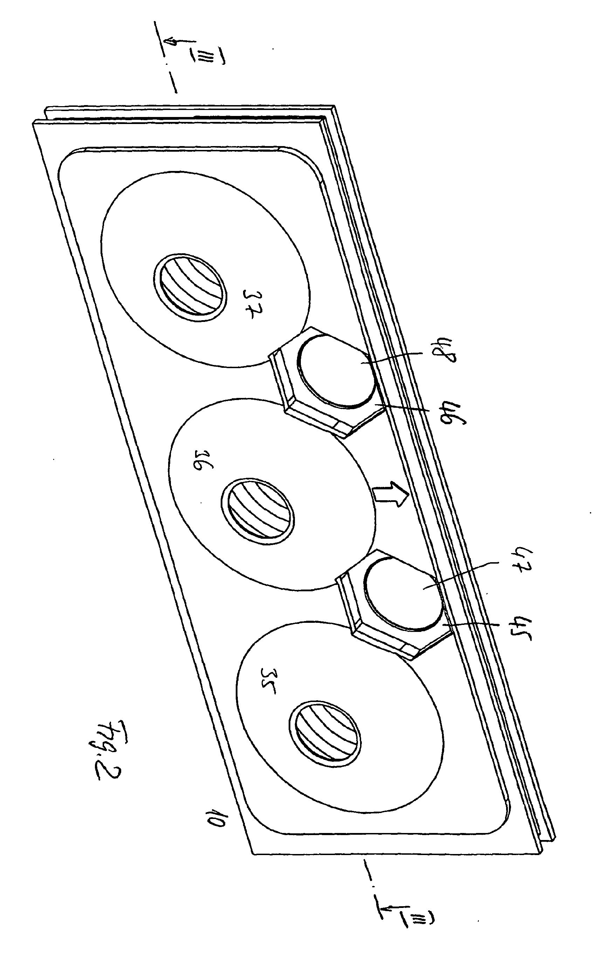

Die Fig. 2 zeigt eine perspektivische Ansicht auf den Wandabschnitt 10 gemäß Pfeilrichung II, wobei hier die Außenflächen der Abschnitte 35, 36, 37 zu sehen sind.

Zwichen den Abschnitten 35 bis 37 befinden sich sechskantförmige Abschnitte 45 und 46 mit geringerem Querschnitt, durch die ebenfalls Kabel hindurch führbar sind. Diese Abschnitte 45 und 46 sind jeweils mittels einer ausbrechbaren Wand 47 und 48 verschlossen.

## Patentansprüche

1. Kabeleinführung in ein Installationsgerät, insbesondere in ein Einspeisegehäuse und dergleichen, mit einem in eine Seitenwandung des Installationsgerätes einsetzbaren Wandabschnitt (10), der wenigstens eine stufig konische, von der Ebene des Wandabschnittes (10) auf dessen einer Seitenfläche (26) aus vorspringende Ausbuchtung (11-13) aufweist, deren Spitze eine Öffnung (22) umgibt, wobei die Ausbuchtung (11-13) je nach Kabeldurchmesser an gewünschter Stufe (14-20) abschneidbar ist, **dadurch gekennzeichnet, daß** die wenigstens eine Ausbuchtung einstückig mit dem Wandabschnitt (10) aus hartem Kunststoff hergestellt ist, daß die Innenflächen (23) der Ausbuchtungen (11-13) und die deren anschließenden Seitenflächen (26) des Wandabschnittes (10) die auf der den Ausbuchtungen (11-13) entgegen gesetzten Seite des Wandabschnittes (10) liegen, mit weichelastischem Kunststoff (27) beschichtet sind, wobei die Öffnung (22) vor Einführung des bzw. der Kabel von dem weich elastischen Kunststoff (27) verschlossen ist, und daß die Ausbuchtung, daß heißt der Fuß (24) der Ausbuchtung auf der der Ausbuchtung entgegengesetzt liegenden Seitenfläche (26) des Wandabschnittes (10) von dem weich elastischen Kunststoff (27) unter Freilassung einer Durchgangsöffnung (38), deren Mittelachse mit der Öffnung (22) fluchtet, abgedeckt ist.

2. Kabeleinführung nach Anspruch 1, **dadurch gekennzeichnet, daß** der den Fuß (24) der Ausbuchtungen (11-13) überdeckende Bereich auf der der Ausbuchtung entgegengesetzten Seite konvex vorgewölbt ist.

3. Kabeleinführung nach Anspruch 2, **dadurch gekennzeichnet, daß** die konvexe Seite konisch vorgewölbt ist.

4. Kabeteinführung nach einem der vorigen Ansprüche, **dadurch gekennzeichnet, daß** die die Öffnung (22) verschließende Membran (31-33) mittig einen Abstand geringerer Dikke aufweist, so daß hierdurch ein Kabel mit geringerem Querschnitt hindurchführbar ist.

5. Kabeleinführung nach einem der vorigen Ansprüche, **dadurch gekennzeichnet, daß** die Komponente weichelastischer Kunststoffe (27) einstückig ist.

6. Kabeleinführung nach einem der vorigen Ansprüche, **dadurch gekennzeichnet, daß** im Bereich der Stulungen (14-20) der gestuften Ausbuchtungen (11-13) Rillen (39) vorgesehen sind, an denen die Stufungen (14-20) der Ausbuchtung (11-13) abschneidbar sind.

## Claims

1. Cable entry into an installation unit, in particular into a feed housing and the like, having a wall section (10) which can be inserted into a side wall of the installation unit and has at least one stepped conical bulge (11-13) which projects from the plane of the wall section (10) at one side face (26) of the said wall section, the tip of the said bulge surrounding an opening (22), it being possible for the bulge (11-13) to be cut at a desired step (14-20) depending on the cable diameter, **characterized in that** the at least one bulge is integrally produced with the wall section (10) from hard plastic, **in that** the inner faces (23) of the bulges (11-13) and the side faces (26) of the wall section (10), which adjoin the said inner faces and rest on that side of the wall section (10) which is opposite the bulges (11-13), are coated with soft-elastic plastic (27), with the opening (22) being closed by the soft-elastic plastic (27) before the cable or cables is/are inserted, and **in that** the bulge, that is to say the foot (24) of the bulge, is covered by the soft-elastic plastic (27) so as to leave free a passage opening (38), of which the centre axis is aligned with the opening (22), on that side face (26) of the wall section (10) which is opposite the bulge.

2. Cable entry according to Claim 1, **characterized in that** the region which covers the foot (24) of the bulges (11-13) is convexly pre-curved on that side which is opposite the bulge.

3. Cable entry according to Claim 2, **characterized in that** the convex side is conically pre-curved.

4. Cable entry according to one of the preceding claims, **characterized in that** the diaphragm (31-33) which closes the opening (22) has a relatively small clearance in the centre, so that a cable with a small cross section can be routed through the said diaphragm.

5. Cable entry according to one of the preceding claims, **characterized in that** the component comprising soft-elastic plastics (27) is integral.

6. Cable entry according to one of the preceding claims, **characterized in that** grooves (39) are provided in the region of the stepped portions (14-20) of the stepped bulges (11-13), it being possible for the stepped portions (14-20) of the bulges (11-13) to be cut at the said grooves.

## Revendications

1. Entrée de câble dans un dispositif d'installation, en particulier dans un boîtier d'alimentation et similaire, comprenant une portion de paroi (10) pouvant être insérée dans une paroi latérale du dispositif d'installation, laquelle présente au moins un renflement (11-13) de forme conique étagée, saillant hors du plan de la portion de paroi (10) sur l'une de ses faces latérales (26), dont la pointe entoure une ouverture (22), le renflement (11-13) pouvant être coupé à l'étage souhaité (14-20) en fonction du diamètre du câble, **caractérisée en ce que** l'au moins un renflement est fabriqué d'une seule pièce avec la portion de paroi (10) en plastique dur, **en ce que** les faces internes (23) des renflements (11-13) et les faces latérales (26) de la portion de paroi (10) s'y raccordant, qui se situent du côté de la portion de paroi (10) opposé aux renflements (11-13), sont revêtues de plastique souple élastique (27), l'ouverture (22) étant fermée avant l'introduction du ou des câbles par le plastique souple élastique (27), et **en ce que** le renflement, c'est-à-dire la base (24) du renflement sur la surface latérale (26) de la portion de paroi (10) située à l'opposé du renflement, est recouvert(e) par le plastique souple élastique (27) en laissant libre une ouverture de passage (38) dont l'axe médian est aligné avec l'ouverture (22).

2. Entrée de câble selon la revendication 1, **caractérisée en ce que** la région recouvrant la base (24) des renflements (11-13) est précintrée sous forme convexe du côté opposé au renflement.

3. Entrée de câble selon la revendication 2, **caractérisée en ce que** le côté convexe est précintré de manière conique.

4. Entrée de câble selon l'une quelconque des revendications précédentes, **caractérisée en ce que** la membrane (31-33) fermant l'ouverture (22) présente centralement une distance de plus petite épaisseur, de sorte qu'un câble de plus petite section transversale puisse être guidé à travers elle.

5. Entrée de câble selon l'une quelconque des revendications précédentes, **caractérisée en ce que** le composant de plastiques souples élastiques (27) est réalisé d'une seule pièce.

6. Entrée de câble selon l'une quelconque des revendications précédentes, **caractérisée en ce que** dans la région des étages (14-20) des renflements étagés (11-13) sont prévues des rainures (39) au niveau desquelles les étages (14-20) du renflement (11-13) peuvent être coupés.
